# DEMANDE DE BREVET EUROPEEN

(11) **EP 1 930 833 A1**
(43) Date de publication de la demande: **11.06.2008**
(21) Numéro de dépôt: 06301228.0
(22) Date de dépôt: 07.12.2006
(51) Int. Cl.: G06F 21/00, G06F 12/14

(54) **Système de protection des données en mémoire**

(71) Demandeur: GEMPLUS, 13420 Gémenos (FR)
(72) Inventeur: GAUTERON, Laurent, 13700, MARIGNANE (FR)

(57) **Abrégé**

L'invention concerne un système de gestion de données. Ledit système comporte une mémoire, des moyens de chiffrement/déchiffrement et un microprocesseur. Ladite mémoire contient une première et une deuxième zones de mémoire dont les plages d'adresses sont juxtaposées de façon continue ou non. Le contenu de la première zone de mémoire est préalablement chiffré avec un premier couple algorithme/clé. Le contenu de la deuxième zone de mémoire est en clair. Lors de la lecture d'un espace mémoire chevauchant les première et deuxième zones de mémoire, l'ensemble des données qui sont lues est déchiffré par les moyens de chiffrement/déchiffrement en utilisant uniquement un couple algorithme/clé correspondant à la fonction inverse du couple algorithme/clé qui a été utilisé pour chiffrer la première zone de mémoire.

## Description

### (Domaine technique)

La présente invention se rapporte aux systèmes de protection des données en mémoire. Plus précisément, l'invention concerne les systèmes de protection de données en mémoire destinés à empêcher le détournement de données lors de leur lecture ou de leur écriture.

### (Art antérieur)

Un système de gestion de données comporte une mémoire pouvant comporter un ou plusieurs circuits de mémoire. La mémoire sert à mémoriser des données accessibles par des adresses. Des zones de mémoire peuvent être définies par une adresse de début et une adresse de fin. L'ensemble des adresses comprises entre ces deux adresses est appelé plage d'adresses. Dans un système de gestion de données, l'ensemble des circuits mémoires présents est généralement couvert par une succession continue ou non de plages d'adresses.

Lorsque des données sont enregistrées dans une mémoire, une zone de mémoire est allouée pour stocker ces données. Cette zone, ou espace mémoire, est définie par une adresse de début et une longueur ou une adresse de fin. Lors de l'exploitation des données enregistrées dans la mémoire, un espace mémoire est identifié pour accéder en lecture ou en écriture aux données.

Dans le cadre de l'attaque d'un système de gestion de données par une personne mal intentionnée, une technique connue consiste à changer l'adresse de fin d'un espace qui est lu, de sorte que le système lit un plus grand nombre de données que ce qui est prévu dans le cadre d'un fonctionnement normal. Par exemple, une telle attaque peut consister à modifier la borne de fin de l'espace mémoire réservé aux données accessibles à l'extérieur du système. La mise en place d'une attaque de ce type peut avoir pour effet de forcer le système à envoyer des données qui sont enregistrées sur la plage d'adresses qui suit les données accessibles. Ainsi, des données supplémentaires peuvent être transmises à l'extérieur par le système. Ces données peuvent être confidentielles ou critiques pour la sécurité du système.

Afin d'éviter de telles attaques, il est connu de chiffrer les données qui doivent être protégées. Dans ce cas, seules les données à protéger sont chiffrées pour préserver leur confidentialité. Il est également connu d'ajouter des contrôles spécifiques dans les systèmes d'exploitations des systèmes de gestion de données. Ces contrôles spécifiques ont pour finalité d'empêcher la modification de la longueur des données qui doivent être lues. Des contrôles spécifiques peuvent également être ajoutés dans les applications qui utilisent les données des systèmes de gestion de données. Les contrôles spécifiques qui sont ajoutés sont généralement des vérifications basées sur le principe de redondance ou des vérifications basées sur des capteurs de sécurité.

Un problème est que les contrôles spécifiques qui sont ajoutés ne permettent pas d'assurer que tous les cas d'exploitations des données à protéger sont bien couverts automatiquement lors de la lecture de données.

### (Résumé de l'invention)

L'invention vise à automatiser la protection des données enregistrées lors des lectures/écritures de données.

Contrairement à un système de gestion de données classique, l'invention peut protéger des données enregistrées en clair qui sont placées dans des plages d'adresses, proches ou non, de données enregistrées chiffrées. L'invention peut également protéger des données enregistrées chiffrées selon un premier mode et qui sont placées dans des plages d'adresses, proches ou non, de données enregistrées chiffrées selon un second mode. Lors d'une phase de lecture, les données lues sont systématiquement traitées par des moyens de chiffrement/déchiffrement au moyen d'un couple unique d'algorithme et clé. Il devient inexploitable de lire des données dans une autre zone de mémoire par débordement de la lecture d'une première zone mémoire dont la longueur a été artificiellement allongée.

L'invention est un système de gestion de données. Ledit système comporte un microprocesseur, une mémoire de données et des moyens de chiffrement/déchiffrement. Ladite mémoire de données contient une première et une deuxième zones de mémoire. Chaque zone de mémoire est définie respectivement par une première et une deuxième plages d'adresses. Les plages d'adresses des deux zones de mémoire peuvent être contiguës ou non. Le contenu de la première zone de mémoire est chiffré avec un premier couple algorithme/clé. Le contenu de la deuxième zone de mémoire est en clair ou est chiffré avec un second couple algorithme/clé. Lesdits moyens de chiffrement/déchiffrement, situés entre le microprocesseur et la mémoire permettent de coder/décoder les données situées dans la mémoire. Lors d'un accès à un espace mémoire contenant au moins une donnée appartenant à la première zone de mémoire et au moins une donnée appartenant à la deuxième zone de mémoire, l'ensemble des données qui sont lues est déchiffré par les moyens de chiffrement/déchiffrement en utilisant uniquement un couple algorithme/clé correspondant à la fonction inverse du premier couple algorithme/clé qui a été utilisé pour chiffrer la première zone de mémoire. Lors d'un accès à un espace mémoire contenant au moins une donnée appartenant à la première zone de mémoire et au moins une donnée appartenant à la deuxième zone de mémoire, l'ensemble des données qui sont écrites est chiffré par les moyens de chiffrement/déchiffrement (10) en utilisant uniquement le premier couple algorithme/clé.

Avantageusement, toute donnée amenée à entrer dans la mémoire ou à sortir de la mémoire transite par les moyens de chiffrement/déchiffrement qui peuvent s'activer.

Préférentiellement, l'algorithme utilisé pour chiffrer la première zone de mémoire peut être le même que l'algorithme utilisé pour chiffrer la deuxième zone de mémoire, avec deux clés distinctes.

En variante, l'algorithme utilisé pour chiffrer la première zone de mémoire peut être le même que l'algorithme utilisé pour déchiffrer la première zone de mémoire.

De préférence, la mémoire peut être un unique circuit mémoire.

En variante, la mémoire peut être constituée d'au moins deux circuits de mémoire distincts.

Préférentiellement, ledit système peut être un objet portable électronique.

Avantageusement ledit système peut être une carte à puce.

D'autres particularités et avantages de l'invention apparaîtront clairement à la lecture de la description faite à titre d'exemple non limitatif et en regard des figures suivantes dans lesquelles :
- la figure 1 illustre un système carte à puce comportant une mémoire de données, des moyens de chiffrement/déchiffrement et un microprocesseur;
- la figure 2 illustre un exemple de répartition de zones dans un plan mémoire constitué par deux circuits,
- le figure 3 illustre un exemple de lecture de données selon l'invention.

### (Description d'un exemple détaillé de l'invention)

L'invention peut s'appliquer à tout type de système de gestion de données. Notamment elle peut s'appliquer pour des appareils numériques sécurisés portatifs réunissant un processeur et une ou plusieurs mémoires, tel qu'un ordinateur portatif, un baladeur gérant des droits d'accès, une clé USB sécurisée, mais aussi une carte à puce.

L'invention apporte un contrôle sur les données d'une zone mémoire protégée quelle que soit l'utilisation ultérieure par le système des données lues. Par exemple, les données lues peuvent ensuite être copiées dans une autre zone mémoire, ou exploitées pour des traitements, ou encore envoyées à l'extérieur du système.

Un avantage de l'invention est de soulager la charge de développement des applications qui utilisent des données du système de gestion de données. Avec l'invention, le niveau applicatif n'a pas à prendre en charge la mise en place de vérifications spécifiques pour assurer la protection des données.

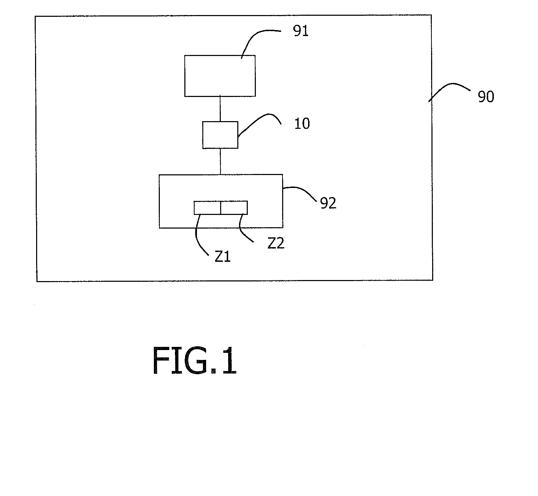

Selon un mode de réalisation préféré, le système de gestion de données est réalisé dans une carte à puce 90 telle que représentée à la figure 1. La carte à puce contient un microprocesseur 91, une mémoire 92 qui contient une première zone de mémoire Z1 et une deuxième zone de mémoire Z2. La mémoire 92 est reliée au microprocesseur via un circuit de chiffrement/déchiffrement 10. Ainsi, lors d'une opération de lecture, la totalité des données lues dans la mémoire 92 transitent par le circuit de chiffrement/déchiffrement 10 qui déchiffre toutes les données lues.

Lorsqu'un espace mémoire doit être lu, le microprocesseur 91 déclenche un ordre de lecture d'un espace mémoire qui est transmis vers la mémoire 92. Cet ordre de lecture indique l'adresse de début de l'espace mémoire à lire et peut indiquer l'adresse de fin ou bien la longueur de l'espace mémoire à lire. Avant de parvenir au microprocesseur 91, les données lues sont déchiffrées par le circuit de chiffrement/déchiffrement 10. Ledit circuit 10 utilise la première donnée de l'espace mémoire lu pour identifier le couple algorithme/clé qui doit être utilisé pour déchiffrer l'intégralité des données de l'espace mémoire lu. Le circuit de chiffrement/déchiffrement 10 peut identifier le couple algorithme/clé qui doit être utilisé en se basant sur une table de correspondance entre zones et couples algorithme/clé. De façon alternative, le circuit de chiffrement/déchiffrement 10 peut identifier le couple algorithme/clé qui doit être utilisé en se basant sur des informations propres à la première donnée lue, telles qu'un identifiant de données par exemple. Le circuit de chiffrement/déchiffrement 10 transmet ensuite les données déchiffrées vers le microprocesseur 91.

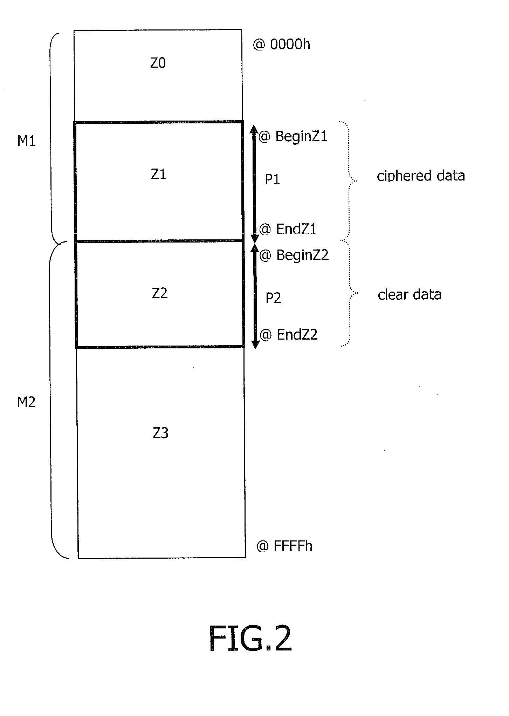

La figure 2 représente un plan de la mémoire 92 contenant quatre zones mémoires Z0, Z1 Z2 et Z3. Le plan mémoire possède un adressage continu de 0000h à FFFFh. La zone Z1 est définie par une première adresse de début @BeginZ1 et une première adresse de fin @EndZ1 qui forment une plage d'adresses P1. La zone Z2 est définie par une deuxième adresse de début @BeginZ2 et une deuxième adresse de fin @EndZ2 qui forment une plage d'adresses P2. Les plages d'adresses P1 et P2 se suivent de façon continue. En d'autres termes la première adresse @BeginZ2 de la plage P2 suit directement la dernière adresse @EndZ1 de la plage P1.

Les données de la zone Z1 ont été préalablement chiffrées avec un premier couple algorithme/clé. Par exemple, l'algorithme utilisé peut être à base de l'opérateur XOR ou peut être du type DES. Les données de la zone Z2 ont été enregistrées en clair. Dans l'exemple de la figure 2, la mémoire 92 est composée de deux circuits mémoire M1 et M2 distincts.

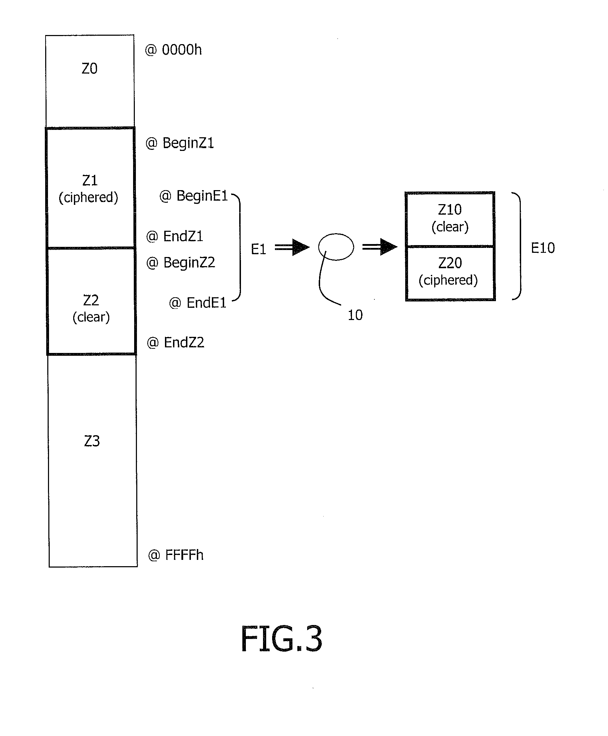

La figure 3 représente la lecture d'un espace mémoire E1 défini par une adresse de début @BeginE1 appartenant à la zone Z1 et une adresse de fin @EndE1 appartenant à la zone Z2. L'espace mémoire E1 contient des données appartenant aux deux zones mémoires Z1 et Z2. L'espace mémoire E1 est placé à cheval sur les plages P1 et P2. Lors de la lecture, toutes les données de l'espace E1 sont automatiquement déchiffrées par le circuit de chiffrement/déchiffrement 10 avant d'être transmises au microprocesseur 91 sous la forme d'un ensemble de données E10. L'ensemble de données E10 est lui-même formé de deux sous-ensembles de données Z10 et Z20.

Le déchiffrement de la totalité des données de l'espace E1 est effectué avec un couple algorithme/clé correspondant à la première donnée lue, c'est-à-dire à la fonction inverse du couple algorithme/clé qui a été utilisé pour chiffrer la zone de mémoire Z1. Les données déchiffrées, correspondant à la première partie des données de l'espace E1 qui appartient à la zone Z1 deviennent le sous-ensemble de données Z10. Les données déchiffrées, correspondant à la deuxième partie des données de l'espace E1 qui appartient à la zone Z2, deviennent le sous-ensemble de données Z20.

Etant donné que les données enregistrées dans la zone Z2 sont en clair, le résultat Z20 après déchiffrement correspond à des données chiffrées. L'ensemble des données E10 issu de la lecture de l'espace E1, via le circuit de chiffrement/déchiffrement 10, contient une première partie Z10 dont les données sont en clair et une deuxième partie Z20 dont les données sont chiffrées.

En variante, les données de la zone Z2 peuvent avoir été préalablement chiffrées avec un deuxième couple algorithme/clé. Par exemple, l'algorithme utilisé peut être à base de l'opérateur XOR ou peut être de type DES. L'algorithme utilisé pour chiffrer la zone Z2 peut être le même que celui utilisé pour chiffrer la zone Z1 mais avec une clef différente ou bien différent de celui qui a été utilisé pour chiffrer la zone Z1. Le résultat Z20 après déchiffrement avec un premier couple d'algorithme/clé correspond à des données toujours chiffrées. L'ensemble des données E10 issu de la lecture de l'espace E1 via le circuit de chiffrement/déchiffrement 10 contient alors une deuxième partie Z20 dont les données sont chiffrées.

L'invention garantit que lorsque le système de gestion de données est amené à lire un espace mémoire qui chevauche les plages d'adresses de deux zones mémoires, seules les données qui sont enregistrées dans la première zone seront exploitables. Les données lues qui sont issues de la deuxième zone de mémoire sont transmises sous une forme chiffrée au microprocesseur.

Un autre avantage de l'invention est de rendre inexploitable l'écriture abusive de données par débordement dans une autre zone de mémoire. Lors d'une phase d'écriture, les données écrites sont systématiquement traitées par les moyens de chiffrement/déchiffrement au moyen d'un couple unique d'algorithme et clé. Par exemple, si le pointeur de lecture indiquant la donnée courante à écrire est abusivement modifié, les données écrites dans une autre zone ne seront pas exploitables lors d'une utilisation ultérieure de l'autre zone.

En variante, l'algorithme utilisé pour déchiffrer les données provenant de la zone Z1 peut être identique à l'algorithme qui a été utilisé pour chiffrer les données de la zone Z1.

En variante, la mémoire 92 peut être contenue dans un unique circuit mémoire.

De façon alternative, la mémoire 92 peut être constituée d'un ensemble de circuits mémoire de types quelconques. Notamment, la mémoire 92 peut être constituée d'une combinaison quelconque de circuits mémoires de type RAM, ROM, EPROM, EEPROM ou FLASH.

Les moyens de chiffrement/déchiffrement 10 peuvent être de type logiciel ou matériel.

Selon un premier mode de déchiffrement, l'espace mémoire E1 peut être déchiffré par groupes d'octets par les moyens de chiffrement/déchiffrement 10. Ce peut être le cas, par exemple, avec un algorithme de type DES.

Selon un deuxième mode de déchiffrement, l'espace mémoire E1 peut être déchiffré octet par octet par les moyens de chiffrement/déchiffrement 10. Ce peut être le cas, par exemple, avec un algorithme basé sur l'opérateur XOR.

Une autre alternative peut être d'utiliser le même algorithme pour chiffrer et déchiffrer les données de la première zone de mémoire Z1. Ce peut être le cas, par exemple, avec un algorithme basé sur l'opérateur XOR.

De façon alternative, la première zone de mémoire Z1 et la deuxième zone de mémoire Z2 ont des plages d'adresses P1 et P2 qui peuvent ne pas être contiguës. La première zone de mémoire Z1 et la deuxième zone de mémoire Z2 peuvent être disjointes.

Une zone peut être fragmentée en plusieurs morceaux disjoints dans la mémoire. La plage d'adresses d'une telle zone est dans ce cas lacunaire.

## Revendications

1. Système de gestion de données comportant
- un microprocesseur (91),
- une mémoire (92) de données contenant une première et une deuxième zones de mémoire (Z1, Z2) chaque zone de mémoire étant définie respectivement par une première et une deuxième plages d'adresses (P1, P2), le contenu de la première zone de mémoire (Z1) étant chiffré avec un premier couple algorithme/clé et le contenu de la deuxième zone de mémoire (Z2) étant en clair ou étant chiffré avec un second couple algorithme /clé, et
- des moyens de chiffrement/déchiffrement (10), situés entre le microprocesseur (91) et la mémoire (92), lesdits moyens permettant de coder/décoder les données situées dans la mémoire,
**caractérisé en ce que** lors d'un accès à un espace mémoire (E1) contenant au moins une donnée appartenant à la première zone de mémoire (Z1) et au moins une donnée appartenant à la deuxième zone de mémoire (Z2), l'ensemble des données qui sont lues est déchiffré par les moyens de chiffrement/déchiffrement (10) en utilisant uniquement un couple algorithme/clé correspondant à la fonction inverse du premier couple algorithme/clé qui a été utilisé pour chiffrer la première zone de mémoire (Z1), et/ou l'ensemble des données qui sont écrites est chiffré par les moyens de chiffrement/déchiffrement (10) en utilisant uniquement le premier couple algorithme/clé.

2. Système selon la revendication 1, **caractérisé en ce que** toute donnée amenée à entrer dans la mémoire ou sortir de la mémoire transite par les moyens de chiffrement/déchiffrement (10) qui s'activent.

3. Système selon l'une des revendications 1 à 2, **caractérisé en ce que** l'algorithme utilisé pour chiffrer la première zone de mémoire (Z1) est le même que l'algorithme utilisé pour chiffrer la deuxième zone de mémoire (Z2), avec deux clés distinctes.

4. Système selon l'une des revendications 1 à 3, **caractérisé en ce que** l'algorithme utilisé pour chiffrer la première zone de mémoire (Z1) est le même que l'algorithme utilisé pour déchiffrer la première zone de mémoire (Z1).

5. Système selon l'une des revendications 1 à 4, **caractérisé en ce que** la mémoire (92) est un unique circuit mémoire.

6. Système selon l'une des revendications 1 à 4, **caractérisé en ce que** la mémoire (92) est constituée d'au moins deux circuits de mémoire distincts.

7. Système selon l'une des revendications 1 à 6, **caractérisé en ce qu'**il est un objet portable électronique.

8. Carte à puce (90) **caractérisé en ce qu'**il contient un système selon l'une des revendications 1 à 7.
